# EUROPEAN PATENT SPECIFICATION

(11) **EP 3 012 766 B1**
(45) Date of publication and mention of the grant of the patent: **24.01.2018**
(21) Application number: 15190406.7
(22) Date of filing: 19.10.2015
(51) Int. Cl.: G06F 21/31, G06F 21/88, G06F 21/50, G06F 21/62, H04W 12/12

(54) **METHOD AND APPARATUS FOR PROCESSING TERMINAL ANOMALY**
VERFAHREN UND VORRICHTUNG ZUR VERARBEITUNG EINER ENDGERÄTEANOMALIE
PROCÉDÉ ET APPAREIL DE TRAITEMENT D'ANOMALIE DE TERMINAL

(30) Priority: 22.10.2014 CN 201410568888
(43) Date of publication of application: 27.04.2016
(73) Proprietor: Xiaomi Inc., Beijing 100085 (CN)
(72) Inventor: LI, Yang, 100085 Beijing (CN); LUO, Aibao, 100085 Beijing (CN); JIANG, Han, 100085 Beijing (CN)
(74) Representative: Sackin, Robert

(56) References cited:
- WO-A1-2013/155143
- US-A1- 2009 253 408
- US-A1- 2010 207 721
- US-A1- 2012 032 891
- US-A1- 2012 147 203
- US-A1- 2013 097 669

## Description

### TECHNICAL FIELD

The present disclosure relates to the field of terminal technologies, and more particularly, to a method and an apparatus for processing a terminal anomaly.

### BACKGROUND

Smart terminals provide various applications and functions for users. These applications and functions help users to achieve more convenient and rapid life styles, such that users are becoming more and more dependent on the smart terminals, and store personal and private data on the smart terminals. As a result, great loss may be caused to users if their smart terminals are lost or stolen.

US patent application with publication no. US 2009/0253408 discloses a method for detecting the loss, theft or unauthorized use of a device. A security compromise event may be determined based on the use of the mobile device and/or the behavior of the current user. A security compromise event may be determined based on the failure of a user to provide the proper biometric data.

US patent application with publication no. US 2010/0207721 discloses systems and methods for identifying unauthorized users of an electronic device. A heartbeat sensor can be used to determine the current user's identity.

US patent application with publication no. US 2013/0097669 discloses a behavioral fingerprint controlled theft detection and recovery method for detecting that a user has performed an action characteristic of the authorized user.

International patent application with publication no. WO 2013/155143 discloses location-based access control for a portable electronic device.

### SUMMARY

The present disclosure provides a method and an apparatus for processing a terminal anomaly, and an electronic device, to solve the technical problem in the related technologies that the terminal is subject to low data security.

Aspects of the present invention are defined by the independent claims below to which reference should now be made. Preferred features are set-out in the dependent claims.

The technical solutions provided in the embodiments of the present disclosure may achieve the following beneficial effects:

According to the present disclosure, use habit information of a user on a terminal is recorded, through a comparison made between the use habit information and operation information of a current user, identity information of the current user may be correctly determined, such that incidents such as terminal loss or terminal theft may be timely discovered; in addition, when the operation information does not match the use habit information, anomaly alarm information is reported, which helps the user to find his or her terminal as soon as possible and thus reduces user's loss.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
FIG. 1 is a flowchart illustrating a method for processing a terminal anomaly according to an exemplary embodiment of the present disclosure;
FIG. 2 is a flowchart illustrating another method for processing a terminal anomaly according to an exemplary embodiment of the present disclosure;
FIG. 3 is a schematic diagram illustrating an interface of the method for processing a terminal anomaly according to an exemplary embodiment of the present disclosure;
FIG 4 is a flowchart illustrating another method for processing a terminal anomaly according to an exemplary embodiment of the present disclosure;
FIG. 5 is a schematic diagram illustrating another interface of the method for processing a terminal anomaly according to an exemplary embodiment of the present disclosure;
FIG. 6 is a block diagram illustrating an apparatus for processing a terminal anomaly according to an exemplary embodiment of the present disclosure;
FIG. 7 is a block diagram illustrating another apparatus for processing a terminal anomaly according to an exemplary embodiment of the present disclosure;
FIG. 8 is a block diagram illustrating another apparatus for processing a terminal anomaly according to an exemplary embodiment of the present disclosure;
FIG. 9 is a block diagram illustrating another apparatus for processing a terminal anomaly according to an exemplary embodiment of the present disclosure; and
FIG. 10 is a schematic structural block diagram illustrating an apparatus for processing a terminal anomaly according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

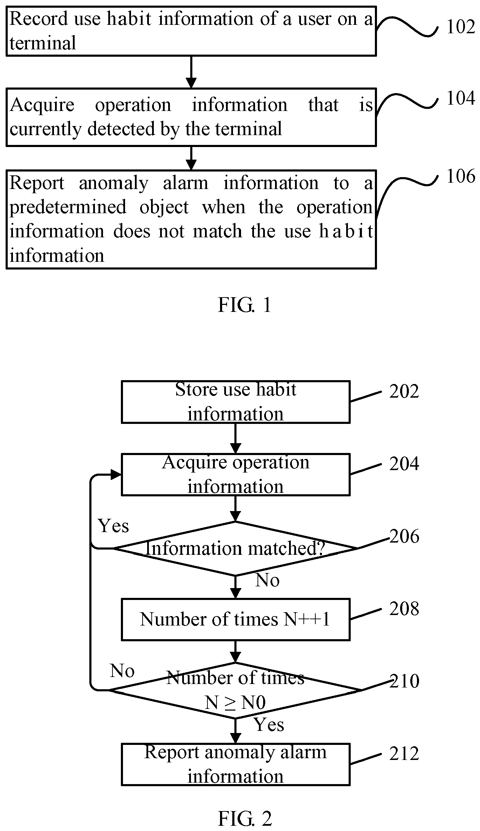

FIG. 1 is a flowchart illustrating a method for processing a terminal anomaly according to an exemplary embodiment of the present disclosure. As illustrated in FIG. 1, the method is applicable to a terminal, and includes the following steps.

In step 102, use habit information of a user on a terminal is recorded.

In this embodiment, the use habit information may include at least one of the following: height information (for example, the height at which the terminal is positioned when the user performs an operation), holding manner (for example, holding on the left hand or holding on the right hand), distance between the terminal and eyes of the user, holding angle (for example, the angle of the terminal to the horizontal direction or the vertical direction when the user performs an operation), interface switching manner (for example, tapping the key "Return" on the screen interface, or tapping the key "Return" on the terminal, or the like), screen unlocking manner (for example, sliding the unlocking identifier to the icon "Unlock" or to the icon "Conversation", or the like), and trajectory pattern of touch gesture (for example, the length of the sliding distance when the user slides the unlocking identifier, or the like).

As an exemplary implementation, a function of defining "use habit" may be configured on the terminal, and after the terminal is initially activated and then the function is automatically enabled or manually enabled by the user, the user is guided to perform one or more operations, such that corresponding use habit information is collected and recorded. As another exemplary implementation, during normal use of the terminal by the user, user's operation behavior is analyzed to determine use habit information of the user.

In this embodiment, after the terminal collects normal operation behavior and information of the user, the terminal may directly analyze the collected normal operation behavior and information and thus obtain the use habit information of the user, or the terminal may upload the collected data to a server and receive the use habit information determined by the server through analysis.

In step 104, operation information that is currently detected by the terminal is acquired.

In step 106, anomaly alarm information is reported to a predetermined object when the operation information does not match the use habit information.

In this embodiment, the reported anomaly alarm information may include at least one of the following: human biological characteristic information of the current user (for example, a face image of the user picked up via a front camera), geographical location information of the terminal and/or information of a corresponding base station, and predetermined prompt short message.

According to the above embodiment of the present disclosure, through a comparison made between the use habit information and operation information of a current user, identity information of the current user may be correctly determined, such that incidents such as terminal loss or terminal theft may be timely discovered; in addition, when the operation information does not match the use habit information, anomaly alarm information is reported, which helps the user to find his or her terminal as soon as possible and thus reduces user's loss.

Referring to FIG. 2, FIG. 2 is a flowchart illustrating another method for processing a terminal anomaly according to an exemplary embodiment of the present disclosure. The method may include the following steps.

In step 202, use habit information of a user is stored on the terminal.

In this embodiment, the use habit information stored on the terminal may be generated by the terminal itself, or may be received and stored by the terminal after the use habit information is generated on a server.

In step 204, operation information of a current user is acquired.

In this embodiment, as an exemplary implementation, the terminal may collect the operation information in real time or according to a predetermined period, and analyze and determine whether the current user is a predetermined user. As another exemplary implementation, the terminal may perform collection and analysis on the operation information of the current user only after a corresponding command is received. For example, if the terminal is a smart phone of a user, the user may generally disable the functions of collecting operation information and identifying user identity, but when the user is aware that his or her smart phone is subject to exceptional circumstances such as loss, the user may send an enable command to his or her smart phone via other devices such as terminals, servers, or the like to enable the functions of collecting operation information and identifying user identity for the current user.

In step 206, it is determined whether the operation information of the current user matches with use habit information stored on the terminal; if the operation information of the current user matches with use habit information stored on the terminal, the process returns to step 204; and otherwise, the process proceeds to step 208.

In this embodiment, using "interface switching manner" as an example, the matching operations in step 206 are described in detail. An application generally includes a plurality of application interfaces, and the plurality of application interfaces are subject to a hierarchical relationship. Therefore, the user needs to switch from the current interface to an upper layer interface in the manner of "Return".

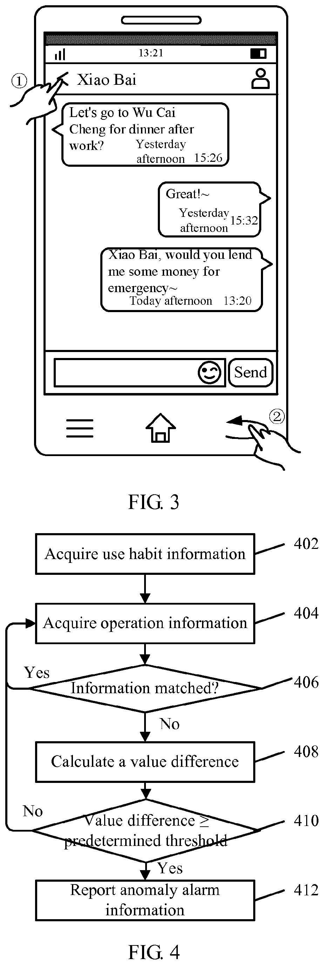

As illustrated in FIG. 3, the current interface is an interface for chatting with "Xiao Bai", and if the user desires to return to an upper layer interface, such returning may be implemented via the operation (1): tapping the virtual key "Return" on the screen interface; or such returning may be implemented via the operation (2): pressing the physical key "Return" on the terminal. Therefore, when the user habitually performs the above interface switching operation via the operation (1), if the current user employs the operation (2), it is determined that a non-matching event is present.

In step 208, the counted number of times N that non-matching events are present within a predetermined time duration is increased by 1.

In this embodiment, the above "predetermined time duration" may be recorded by using a timer. Therefore, when the process proceeds to step 208, it may be firstly determined whether a timer is present; if the timer is present and the time duration does not expire, the corresponding counted number of times N is definitely present, and the number of times N is increased by 1; and if no timer is present, a timer may be started and the counted number of times N may be generated with the initial value of 0, and the number of times N is increased by 1.

In step 210, it is determined whether the number of times N is greater than or equal to a predetermined threshold of the number of times N0; if the number of times N is greater than or equal to the predetermined threshold of the number of times N0, the process proceeds to step 212; and otherwise, the process returns to step 204.

In step 212, the anomaly alarm information is reported to the predetermined object.

Referring to FIG. 4, FIG. 4 is a flowchart illustrating another method for processing a terminal anomaly according to an exemplary embodiment of the present disclosure. The method may include the following steps.

In step 402, use habit information of a user is stored on the terminal.

In this embodiment, the use habit information stored on the terminal may be generated by the terminal itself, or may be received and stored by the terminal after the use habit information is generated on a server.

In step 404, operation information of a current user is acquired.

In this embodiment, as an exemplary implementation, the terminal may collect the operation information in real time or according to a predetermined period, and analyze and determine whether the current user is a predetermined user. As another exemplary implementation, the terminal may perform collection and analysis on the operation information of the current user only after a corresponding command is received. For example, if the terminal is a smart phone of a user, the user may generally disable the functions of collecting operation information and identifying user identity, but when the user is aware that his or her smart phone is subject to exceptional circumstances such as loss, the user may send an enable command to his or her smart phone via other devices such as terminals, servers, or the like to enable the functions of collecting operation information and identifying user identity for the current user.

In step 406, it is determined whether the operation information of the current user matches with use habit information stored on the terminal; if the operation information of the current user matches with use habit information stored on the terminal, the process returns to step 404; and otherwise, the process proceeds to step 408.

In this embodiment, using "screen unlocking" as an example, the matching operations in step 406 are described in detail. After the screen of a terminal is locked, if the screen is lit again, a screen locking interface is displayed on the screen of the terminal, and the screen is unlocked via a screen unlocking operation performed by the user.

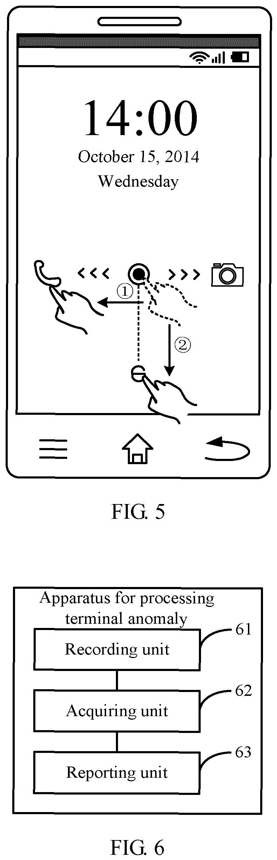

As illustrated in FIG. 5, a plurality of icons are present on the screen locking interface of the terminal, including the icon "Unlock" at the lower part of the screen, the icon "Dial" at the left part of the screen, and the icon "Photograph" at the right part of the screen; the user may unlock the screen and meanwhile implement the corresponding application function by dragging the middle operation identifier to any of the positions of these icons. Assume that the user always unlock the screen via the operation (1) of dragging the operation identifier to the icon "Dial" on the left side, then when the current user unlocks the screen via the operation (2) of dragging the operation identifier to the icon "Unlock" at the lower part of the screen, it indicates that the current user may not be an authorized user, and thus the terminal may be subject to loss or theft.

In step 408, a value difference between a first operation parameter corresponding to the operation information and a second operation parameter corresponding to the use habit information is calculated.

In this embodiment, still using the screen unlocking interface as illustrated in FIG. 5 as an example, the operation parameter may be a movement direction of the operation identifier: when the first operation parameter and the second operation parameter respectively correspond to the operation (2) and the operation (1) as illustrated in FIG. 5, the value difference is an angle difference between the movement directions, for example, 90 degrees; or the operation parameter may be a movement distance of the operation identifier: when the first operation parameter and the second operation parameter both employ the operation (1) as illustrated in FIG. 5, the value difference may be a value difference between the movement distances, for example, 0.5 cm.

In step 410, it is determined whether the value difference is greater than or equal to a predetermined threshold; if the value difference is greater than or equal to the predetermined threshold, the process proceeds to step 412; and otherwise, the process returns to step 404.

In this embodiment, since when the user performs the same operation, a value difference between the operation parameters may be present such that the operation parameters may not be in complete coincidence, thus, by setting a predetermined threshold, it may be accurately determined whether the value difference is caused due to a normal operation error or due to variation of the users.

Therefore, for example, when the first operation parameter and the second operation parameter respectively correspond to the operation (2) and the operation (1) as illustrated in FIG. 5, assume that the predetermined threshold is 10 degrees, when the angle difference between the movement directions is 90 degrees, it indicates that the current user is an unauthorized user, and thus the terminal may be subject to loss or theft; or for example, when the first operation parameter and the second operation parameter both employ the operation (1) as illustrated in FIG. 5, assume that the predetermined threshold is 0.3 cm, when the value difference between the movement distances is 0.5 cm, it indicates that the current user is an unauthorized user, and thus the terminal may be subject to loss or theft.

In step 412, the anomaly alarm information is reported to the predetermined object.

As an exemplary implementation, in the embodiments as illustrated in FIG. 2 and FIG. 4, while the anomaly alarm information is reported, the terminal may also be switched to a function restriction mode, for example, the screen of the terminal is locked or the current user is prohibited from enabling a predetermined function, such that an unauthorized user is prevented from snooping the terminal data or defrauding the contacts recorded on the terminal.

As another exemplary implementation, in the embodiments as illustrated in FIG. 2 and FIG. 4, while the anomaly alarm information is reported, the terminal data may also be uploaded to a predetermined secure storage space and local terminal data is deleted. In this way, not only the data security of the terminal may be ensured, but also an unauthorized user is prevented from snooping the terminal data or defrauding the contacts recorded on the terminal.

Corresponding to the embodiments of the methods for processing a terminal anomaly, the present disclosure further provides embodiments illustrating an apparatus for processing a terminal anomaly.

FIG. 6 is a block diagram illustrating an apparatus for processing a terminal anomaly according to an exemplary embodiment of the present disclosure. Referring to FIG. 6, the apparatus includes: a recording unit 61, an acquiring unit 62, and a reporting unit 63.

The recording unit 61 is configured to record use habit information of a user on a terminal.

The acquiring unit 62 is configured to acquire operation information that is currently detected by the terminal.

The reporting unit 63 is configured to report anomaly alarm information to a predetermined object when the operation information does not match the use habit information.

In the above embodiment, use habit information of a user on a terminal is recorded, through a comparison made between the use habit information and operation information of a current user, identity information of the current user may be correctly determined, such that incidents such as terminal loss or terminal theft may be timely discovered; in addition, when the operation information does not match the use habit information, anomaly alarm information is reported, which helps the user to find his or her terminal as soon as possible and thus reduces user's loss.

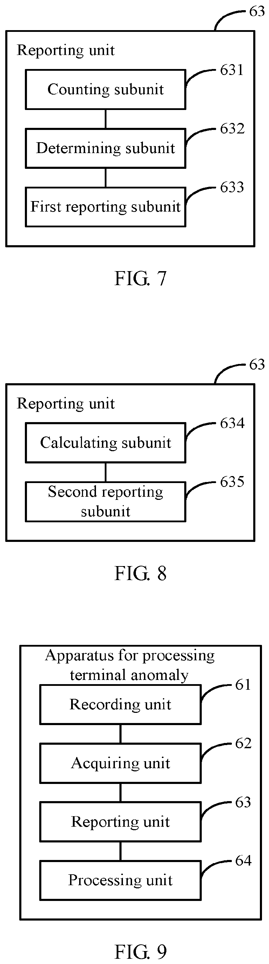

Referring to FIG. 7, FIG. 7 is a block diagram illustrating another apparatus for processing a terminal anomaly according to an exemplary embodiment of the present disclosure. Based on the embodiment as illustrated in FIG. 6, in this embodiment, the reporting unit 63 may include: a counting subunit 631, a determining subunit 632, and a first reporting subunit 633.

The counting subunit 631 is configured to count the number of times of non-matching events within a predetermined time duration.

The determining subunit 632 is configured to determine whether the counted number of times is greater than or equal to a predetermined threshold of the number of times.

The first reporting subunit 633 is configured to report the anomaly alarm information to the predetermined object if the counted number of times is greater than or equal to the predetermined threshold of the number of times.

Referring to FIG. 8, FIG. 8 is a block diagram illustrating another apparatus for processing a terminal anomaly according to an exemplary embodiment of the present disclosure. Based on the embodiment as illustrated in FIG. 6, in this embodiment, the reporting unit 63 may include: a calculating subunit 634 and a second reporting subunit 635.

The calculating subunit 634 is configured to calculate a value difference between a first operation parameter corresponding to the operation information and a second operation parameter corresponding to the use habit information.

The second reporting subunit 635 is configured to report the anomaly alarm information to the predetermined object if the value difference is greater than or equal to a predetermined value difference threshold.

Referring to FIG. 9, FIG. 9 is a block diagram illustrating another apparatus for processing a terminal anomaly according to an exemplary embodiment of the present disclosure. Based on the embodiment as illustrated in FIG. 6, in this embodiment, the apparatus may further include a processing unit 64.

The processing unit 64 is configured to switch the terminal to a function restriction mode and/or upload terminal data to a predetermined secure storage space and delete local terminal data, when the operation information does not match the use habit information.

It shall be noted that, the structure of the processing unit 64 in the apparatus embodiment as illustrated in FIG. 9 may also be included in the apparatus embodiment as illustrated in FIG. 7 or FIG. 8, which is not limited in the present disclosure.

In addition, in the embodiments as illustrated in FIG. 6 to FIG. 9, the use habit information may include at least one of the following:

height information, holding manner, distance between the terminal and the user's eyes, holding angle, human biological characteristic information of the user, contiguous tapping speed, interface switching manner, and trajectory pattern of touch gesture.

In addition, in the embodiments as illustrated in FIG. 6 to FIG. 9, the anomaly alarm information may include at least one of the following:

human biological characteristic information of the current user, geographical location information of the terminal and/or information of a corresponding base station, and predetermined prompt short message.

With respect to the apparatuses in the above embodiments, the specific implementations of operations executed by various modules thereof have been described in detail in the embodiments illustrating the methods, which are not described herein any further.

With respect to the apparatus embodiments, since the apparatus embodiments are based on the method embodiments, relevant parts may be referred to the equivalents in the method embodiments. The above-described apparatus embodiments are exemplary only. The units described as separate components may be or may not be physically independent of each other. The element illustrated as a unit may be or may not be a physical unit, which may be either located at a position or deployed on a plurality of network units. Part of or all of the modules may be selected as required to implement the technical solutions disclosed in the embodiments of the present disclosure. Persons of ordinary skills in the art may understand and implement the embodiments without any creative effort.

Correspondingly, the present disclosure further provides an apparatus for processing a terminal anomaly. The apparatus includes: a processor; and a memory for storing instructions executable by the processor; wherein the processor is configured to: record use habit information of a user on a terminal; acquire operation information that is currently detected by the terminal; and report anomaly alarm information to a predetermined object when the operation information does not match the use habit information.

Correspondingly, the present disclosure further provides a terminal. The terminal includes a memory and at least one program, wherein at least one program is stored in the memory, and is configured to be run by at least one processor to execute instructions, contained in the at least one program, for performing the following operations: recording use habit information of a user on a terminal; acquiring operation information that is currently detected by the terminal; and reporting anomaly alarm information to a predetermined object when the operation information does not match the use habit information.

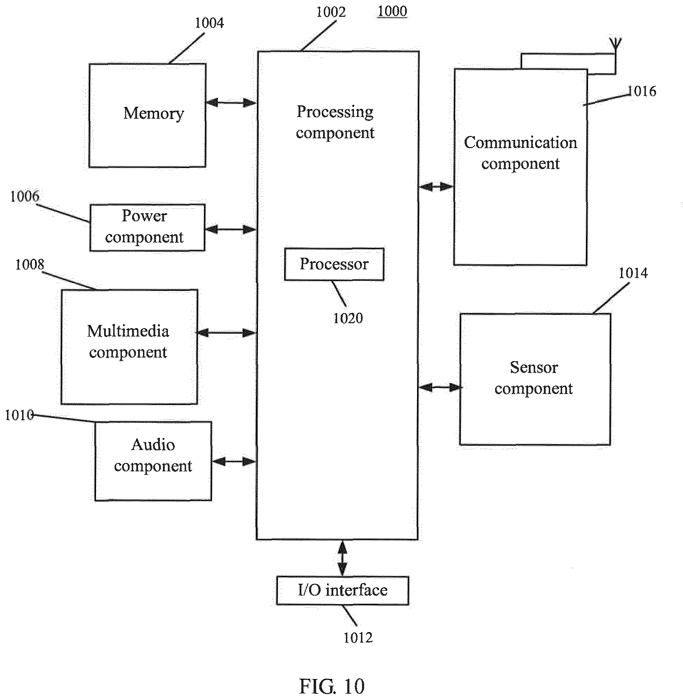

FIG. 10 is a schematic structural block diagram illustrating an apparatus 1000 for processing a terminal anomaly according to an exemplary embodiment of the present disclosure. For example, the apparatus 1000 may be a mobile phone, a computer, a digital broadcast terminal, a messaging device, a gaming console, a tablet, a medical device, an exercise equipment, a personal digital assistant, and the like.

Referring to FIG. 10, the apparatus 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the apparatus 1000, such as the operations associated with display, telephone calls, data communications, camera operations, and recording operations. The processing component 1002 may include one or more processors 1020 to execute instructions to perform all or a part of the steps in the above-described methods. In addition, the processing component 1002 may include one or more modules which facilitate the interaction between the processing component 1002 and other components. For example, the processing component 1002 may include a multimedia module to facilitate the interaction between the multimedia component 10010 and the processing component 1002.

The memory 1004 is configured to store various types of data to support the operations of the apparatus 1000. Examples of such data include instructions for any application or method operated on the apparatus 1000, contact data, phonebook data, messages, pictures, videos, and the like. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 may include a power management system, one or more power supplies, and other components associated with the generation, management, and distribution of power in the apparatus 1000.

The multimedia component 1008 includes a screen providing an output interface between the apparatus 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and/or the rear camera may receive external multimedia data while the apparatus 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone (MIC) configured to receive an external audio signal when the apparatus 1000 is in an operation mode, such as a call mode, a recording mode, or a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and a peripheral interface module, such as a keyboard, a click wheel, a button, or the like. The buttons may include, but are not limited to, a home button, a volume button, a starting button, and a locking button.

The sensor component 1014 includes one or more sensors to provide status assessments of various aspects of the apparatus 1000. For example, the sensor component 1014 may detect an open/closed status of the apparatus 1000, relative positioning of components, e.g., the display and the keypad, of the apparatus 1000, a change in position of the apparatus 1000 or a component of the apparatus 1000, a presence or absence of user contact with the apparatus 1000, an orientation or an acceleration/deceleration of the apparatus 1000, and a change in temperature of the apparatus 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communications, wired or wirelessly, between the apparatus 1000 and other devices. The apparatus 1000 may access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods for processing a terminal anomaly.

In exemplary embodiments, there is also provided a non-transitory computer-readable storage medium including instructions, such as the memory 1004 including instructions, executable by the processor 1020 in the apparatus 1000, for performing the above-described methods for processing a terminal anomaly. For example, the non-transitory computer-readable storage medium may be a ROM, a random access memory (RAM), a compact disc read-only memory (CD-ROM), a magnetic tape, a floppy disc, an optical data storage device, or the like.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope of the invention being indicated by the appended claims.

It will be appreciated that the present disclosure is not limited to the exact construction that has been described above and illustrated in the accompanying drawings, and that various modifications and changes can be made. The scope of the present invention is only defined by the appended claims.

## Claims

1. A method for processing a terminal anomaly, comprising:
recording use habit information of a user on a terminal (102);
acquiring operation information that is currently detected by the terminal (104); and
reporting anomaly alarm information to a predetermined object when the operation information does not match the use habit information (106), **characterized in that** the use habit information comprises at least one of the following:
holding manner, distance between the terminal and the user's eyes, and holding angle and further **characterized in that** reporting anomaly alarm information to a predetermined object when the operation information does not match the use habit information comprises:
counting the number of times of non-matching events within a predetermined time duration (208);
determining whether the counted number of times is greater than or equal to a predetermined threshold of the number of times (210); and
reporting the anomaly alarm information to the predetermined object if the counted number of times is greater than or equal to the predetermined threshold of the number of times (212).

2. The method according to claim 1, **characterized in that** the anomaly alarm information comprises at least one of the following:
human biological characteristic information of the current user, geographical location information of the terminal and/or information of a corresponding base station, and predetermined prompt short message.

3. The method according to any preceding claim, further comprising:
switching the terminal to a function restriction mode and/or uploading terminal data to a predetermined secure storage space and deleting local terminal data, when the operation information does not match the use habit information.

4. An apparatus for processing a terminal anomaly, comprising:
a recording unit (61), configured to record use habit information of a user on a terminal;
an acquiring unit (62), configured to acquire operation information that is currently detected by the terminal; and
a reporting unit (63), configured to report anomaly alarm information to a predetermined object when the operation information does not match the use habit information, **characterized in that** the use habit information comprises at least one of the following:
holding manner, distance between the terminal and the user's eyes, and holding angle and further **characterized in that** the reporting unit comprises:
a counting subunit (631), configured to count the number of times of non-matching events within a predetermined time duration;
a determining subunit (632), configured to determine whether the counted number of times is greater than or equal to a predetermined threshold of the number of times; and
a first reporting subunit (633), configured to report the anomaly alarm information to the predetermined object if the counted number of times is greater than or equal to the predetermined threshold of the number of times.

5. The apparatus according to claim 4, **characterized in that** the anomaly alarm information comprises at least one of the following:
human biological characteristic information of the current user, geographical location information of the terminal and/or information of a corresponding base station, and predetermined prompt short message.

6. The apparatus according to claim 4 or claim 5, further comprising:
a processing unit (64), configured to switch the terminal to a function restriction mode and/or upload terminal data to a predetermined secure storage space and delete local terminal data, when the operation information does not match the use habit information.

7. An electronic device, comprising:
a processor (1020); and
a memory (1004) for storing instructions executable by the processor (1020);
wherein the processor (1020) is configured to:
record use habit information of a user on the electronic device;
acquire operation information that is currently detected by the electronic device; and
report anomaly alarm information to a predetermined object when the operation information does not match the use habit information, **characterized in that** the use habit information comprises at least one of the following:
holding manner, distance between the electronic device and the user's eyes, and holding angle; and further **characterized in that** report anomaly alarm information to a predetermined object when the operation information does not match the use habit information comprises:
count the number of times of non-matching events within a predetermined time duration (208);
determine whether the counted number of times is greater than or equal to a predetermined threshold of the number of times (210); and
report the anomaly alarm information to the predetermined object if the counted number of times is greater than or equal to the predetermined threshold of the number of times (212).

8. A computer program which, when being executed on a processor (1020) of an apparatus, performs a method according to any of claims 1 to 3.

## Patentansprüche

1. Verfahren zum Verarbeiten einer Endgeräteanomalie, das aufweist:
Aufzeichnen von Nutzungsgewohnheitsinformationen eines Benutzers auf einem Endgerät (102);
Erfassen von Betriebsinformationen, die aktuell von dem Endgerät detektiert werden, (104) und
Melden von Anomaliealarminformationen einem vorbestimmten Objekt, wenn die Betriebsinformationen nicht mit den Nutzungsgewohnheitsinformationen übereinstimmen, (106), **dadurch gekennzeichnet, dass** die Nutzungsgewohnheitsinformationen wenigstens eine der folgenden aufweisen:
Halteweise, Abstand zwischen dem Endgerät und den Augen des Benutzers und Haltewinkel, und ferner **dadurch gekennzeichnet, dass** das Melden von Anomaliealarminformationen einem vorbestimmten Objekt, wenn die Betriebsinformationen nicht mit den Nutzungsgewohnheitsinformationen übereinstimmen, aufweist:
Zählen der Anzahl von Nichtübereinstimmungsereignissen innerhalb einer vorbestimmten Zeitspanne (208);
Bestimmen, ob die gezählte Anzahl größer oder gleich einer vorbestimmten Schwelle der Anzahl ist (210); und
Melden der Anomaliealarminformationen dem vorbestimmten Objekt, wenn die gezählte Anzahl größer oder gleich der vorbestimmten Schwelle der Anzahl ist (212).

2. Verfahren nach Anspruch 2, **dadurch gekennzeichnet, dass** die Anomaliealarminformationen wenigstens eine der folgenden aufweisen: menschliche biologische charakteristische Informationen des aktuellen Benutzers, geographische Positionsinformationen des Endgeräts und/oder Informationen über eine entsprechende Basisstation und vorbestimmte Aufforderungskurznachricht.

3. Verfahren nach einem der vorhergehenden Ansprüche, das ferner aufweist:
Umschalten des Endgeräts auf einen Funktionsbeschränkungsmodus und/oder Hochladen von Endgerätedaten zu einem vorbestimmten sicheren Speicherbereich und Löschen lokaler Endgerätedaten, wenn die Betriebsinformationen nicht mit den Nutzungsgewohnheitsinformationen übereinstimmen.

4. Vorrichtung zum Verarbeiten einer Endgeräteanomalie, die aufweist:
eine Aufzeichnungseinheit (61), die zum Aufzeichnen von Nutzungsgewohnheitsinformationen eines Benutzers auf einem Endgerät konfiguriert ist;
eine Erfassungseinheit (62), die zum Erfassen von Betriebsinformationen, die aktuell von dem Endgerät detektiert werden, konfiguriert ist; und
eine Meldeeinheit (63), die zum Melden von Anomaliealarminformationen einem vorbestimmten Objekt, wenn die Betriebsinformationen nicht mit den Nutzungsgewohnheitsinformationen übereinstimmen, konfiguriert ist,
**dadurch gekennzeichnet, dass** die Nutzungsgewohnheitsinformationen wenigstens eine der Folgenden aufweisen:
Halteweise, Abstand zwischen dem Endgerät und den Augen des Benutzers und Haltewinkel, und ferner **dadurch gekennzeichnet, dass** die Meldeeinheit aufweist:
eine Zähluntereinheit (631), die zum Zählen der Anzahl von Nichtübereinstimmungsereignissen innerhalb einer vorbestimmten Zeitspanne konfiguriert ist;
eine Bestimmungsuntereinheit (632), die zum Bestimmen, ob die gezählte Anzahl größer oder gleich einer vorbestimmten Schwelle der Anzahl ist, konfiguriert ist; und
eine erste Meldeuntereinheit (633), die zum Melden der Anomaliealarminformationen dem vorbestimmten Objekt, wenn die gezählte Anzahl größer oder gleich der vorbestimmten Schwelle der Anzahl ist, konfiguriert ist.

5. Vorrichtung nach Anspruch 4, **dadurch gekennzeichnet, dass** die Anomaliealarminformationen wenigstens eine der Folgenden aufweisen: menschliche biologische charakteristische Informationen des aktuellen Benutzers, geographische Positionsinformationen des Endgeräts und/oder Informationen über eine entsprechende Basisstation und vorbestimmte Aufforderungskurznachricht.

6. Vorrichtung nach Anspruch 4 oder Anspruch 5, die ferner aufweist:
eine Verarbeitungseinheit (64), die zum Umschalten des Endgeräts auf einen Funktionsbeschränkungsmodus und/oder Hochladen von Endgerätedaten zu einem vorbestimmten sicheren Speicherbereich und Löschen lokaler Endgerätedaten, wenn die Betriebsinformationen nicht mit den Nutzungsgewohnheitsinformationen übereinstimmen, konfiguriert ist.

7. Elektronisches Gerät, das aufweist:
einen Prozessor (1020) und
einen Speicher (1004) zum Speichern von Anweisungen, die durch den Prozessor (1020) ausführbar sind,
wobei der Prozessor (1020) konfiguriert ist zum:
Aufzeichnen von Nutzungsgewohnheitsinformationen eines Benutzers auf dem elektronischen Gerät;
Erfassen von Betriebsinformationen, die aktuell von dem elektronischen Gerät detektiert werden, und
Melden von Anomaliealarminformationen einem vorbestimmten Objekt, wenn die Betriebsinformationen nicht mit den Nutzungsgewohnheitsinformationen übereinstimmen, **dadurch gekennzeichnet, dass** die Nutzungsgewohnheitsinformationen wenigstens eine der Folgenden aufweisen:
Halteweise, Abstand zwischen dem elektronischen Gerät und den Augen des Benutzers und Haltewinkel;
und ferner **dadurch gekennzeichnet, dass** das Melden von Anomaliealarminformationen einem vorbestimmten Objekt, wenn die Betriebsinformationen nicht mit den Nutzungsgewohnheitsinformationen übereinstimmen, aufweist:
Zählen der Anzahl von Nichtübereinstimmungsereignissen innerhalb einer vorbestimmten Zeitspanne (208);
Bestimmen, ob die gezählte Anzahl größer oder gleich einer vorbestimmten Schwelle der Anzahl ist (210); und
Melden der Anomaliealarminformationen dem vorbestimmten Objekt, wenn die gezählte Anzahl größer oder gleich der vorbestimmten Schwelle der Anzahl ist (212).

8. Computerprogramm, das bei Ausführung auf einem Prozessor (1020) einer Vorrichtung ein Verfahren nach einem der Ansprüche 1 bis 3 durchführt.

## Revendications

1. Procédé de traitement d'une anomalie de terminal, comprenant :
l'enregistrement d'informations d'habitude d'utilisation d'un utilisateur sur un terminal (102)
l'acquisition d'informations de fonctionnement qui sont présentement détectées par le terminal (104) ; et
la communication d'informations d'alarme d'anomalie à un objet prédéterminé quand les informations de fonctionnement ne correspondent pas aux informations d'habitude d'utilisation (106), **caractérisé en ce que** les informations d'habitude d'utilisation comprennent au moins l'une des informations suivantes :
manière de tenue, distance entre le terminal et les yeux de l'utilisateur, et angle de tenue et **caractérisé en outre en ce que** la communication d'informations d'alarme d'anomalie à un objet prédéterminé quand les informations de fonctionnement ne correspond pas aux informations d'habitude d'utilisation comprend :
le compte du nombre de fois que des événements non concordants se produisent dans une durée de temps prédéterminée (208) ;
la détermination que le nombre de fois compté est ou non supérieur ou égal à une limite prédéterminée du nombre de fois (210) ; et
la communication des informations d'alarme d'anomalie à l'objet prédéterminé si le nombre de fois compté est supérieur ou égal à la limite prédéterminée du nombre de fois (212).

2. Procédé selon la revendication 2, **caractérisé en ce que** les informations d'alarme d'anomalie comprennent au moins l'une des informations suivantes :
des informations de caractéristiques biologiques humaines de l'utilisateur actuel, des informations d'emplacement géographique du terminal et/ou des informations d'une station de base correspondante, et un court message d'invite prédéterminé.

3. Procédé selon l'une quelconque des revendications précédentes, comprenant en outre :
la commutation du terminal sur un mode de restriction de fonction et/ou le téléchargement de données de terminal dans un espace de mémorisation sécurisé prédéterminé et la suppression de données de terminal locales, quand les informations de fonctionnement ne correspondent pas aux informations d'habitude d'utilisation.

4. Appareil de traitement d'une anomalie de terminal, comprenant :
une unité d'enregistrement (61), configurée pour enregistrer des informations d'habitude d'utilisation d'un utilisateur sur un terminal;
une unité d'acquisition (62), configurée pour acquérir des informations de fonctionnement qui sont présentement détectées par le terminal; et
une unité de communication (63), configurée pour communiquer des informations d'alarme d'anomalie à un objet prédéterminé quand les informations de fonctionnement ne correspondent pas aux informations d'habitude d'utilisation,
**caractérisé en ce que** les informations d'habitude d'utilisation comprennent au moins l'une des informations suivantes :
manière de tenue, distance entre le terminal et les yeux de l'utilisateur, et angle de tenue et **caractérisé en outre en ce que** l'unité de communication comprend :
une sous-unité de comptage (631), configurée pour compter le nombre de fois que des événements non concordants se produisent dans une durée de temps prédéterminée ;
une sous-unité de détermination (632), configurée pour déterminer que le nombre de fois compté est ou non supérieur ou égal à une limite prédéterminée du nombre de fois ; et
une première sous-première de communication (633), configurée pour communiquer des informations d'alarme d'anomalie à l'objet prédéterminé si le nombre de fois compté est supérieur ou égal à la limite prédéterminée du nombre de fois.

5. Appareil selon la revendication 4, **caractérisé en ce que** les informations d'alarme d'anomalie comprennent au moins l'une des informations suivantes :
des informations de caractéristiques biologiques humaines de l'utilisateur actuel, des informations d'emplacement géographique du terminal et/ou des informations d'une station de base correspondante, et un court message d'invite prédéterminé.

6. Appareil selon la revendication 4 ou la revendication 5, comprenant en outre :
une unité de traitement (64), configurée pour commuter le terminal sur un mode de restriction de fonction et/ou télécharger des données de terminal dans un espace de mémorisation sécurisé prédéterminé et supprimer des données de terminal locales, quand les informations de fonctionnement ne correspondent pas aux informations d'habitude d'utilisation.

7. Dispositif électronique, comprenant :
un processeur (1020) ; et
une mémoire (1004) pour mémoriser des instructions exécutables par le processeur (1020) ;
dans lequel le processeur (1020) est configuré pour :
enregistrer des informations d'habitude d'utilisation d'un utilisateur sur le dispositif électronique ;
acquérir des informations de fonctionnement qui sont présentement détectées par le dispositif électronique ; et
communiquer des informations d'alarme d'anomalie à un objet prédéterminé quand les informations de fonctionnement ne correspondent pas aux informations d'habitude d'utilisation, **caractérisé en ce que** les informations d'habitude d'utilisation comprennent au moins l'une des informations suivantes :
manière de tenue, distance entre le dispositif électronique et les yeux de l'utilisateur, et angle de tenue et **caractérisé en outre en ce que** communiquer des informations d'alarme d'anomalie à un objet prédéterminé quand les informations de fonctionnement ne correspondent pas aux informations d'habitude d'utilisation consiste à :
compter le nombre de fois que des événements non concordants se produisent dans une durée de temps prédéterminée (208) ;
déterminer que le nombre de fois compté est ou non supérieur ou égal à une limite prédéterminée du nombre de fois (210) ; et
communiquer les informations d'alarme d'anomalie à l'objet prédéterminé si le nombre de fois compté est supérieur ou égal à la limite prédéterminée du nombre de fois (212).

8. Programme informatique qui, à son exécution sur un processeur (1020) d'un appareil, exécute un procédé selon l'une quelconque des revendications 1 à 3.
